# EUROPÄISCHE PATENTANMELDUNG

(11) **EP 2 281 443 A1**
(43) Veröffentlichungstag der Anmeldung: **09.02.2011**
(21) Anmeldenummer: 09009958.1
(22) Anmeldetag: 01.08.2009
(51) Int. Cl.: A01G 9/10

(54) **Verfahren zum Ausstanzen von Töpfen aus verdichteter Kultivierungsmasse und Stanze zur Durchführung des Verfahrens**

(71) Anmelder: Unger Maschinenbau GmbH, 69221 Dossenheim (DE)
(72) Erfinder: Ehrhard, Sebastian, 69221 Dossenheim (DE)
(74) Vertreter: Meyer-Roedern, Giso

(57) **Zusammenfassung**

Die Stanze (1) hat ein in die Kultivierungsmasse eintauchendes Werkzeug mit Schneiden, die Kammern abteilen, in denen Auswerfer (3) wirken. Die Auswerfer (3) üben im Zuge eines Stellhubs der Auswerfer (3) und des Werkzeugs relativ zueinander Druck auf die Oberseite der ausgestanzten Töpfe aus. Dadurch werden die Töpfe aus den Kammern heraus befördert. Anfangs des Stellhubs wird mit einer Anpressplatte (4) Gegendruck auf die Unterseite der Töpfe ausgeübt.

## Beschreibung

### Beschreibung

Die Erfindung betrifft eine Stanze zum Vereinzeln wenigstens eines Topfs, wenigstens eines Riegels in einer Reihe zusammenhängender Töpfe, wenigstens eines flächigen Verbunds zusammenhängender Töpfe oder einer Kombination davon. Die Töpfe bestehen aus verdichteter Kultivierungsmasse wie z. B. Erde oder Torf. Die Stanze hat ein in die Masse eintauchendes Werkzeug mit Schneiden, die wenigstens eine Kammer abteilen, und einen Auswerfer, der im Zuge eines Stellhubs von Auswerfer und Werkzeug relativ zueinander Druck auf die Oberseite des ausgestanzten Topfs auszuüben und den Topf durch eine Ausgabeöffnung der Kammer aus dieser heraus zu befördern geeignet ist.

Desweiteren betrifft die Erfindung ein Verfahren zum Ausstanzen von Töpfen aus verdichteter Kultivierungsmasse.

Preßtöpfe aus Erde oder Torf werden vollautomatisiert in sehr großer Zahl hergestellt, mit Samen beschickt und zur weiteren Kultivierung an Gärtnereibetriebe überstellt.

Ausgangsmaterial für die Herstellung der Preßtöpfe ist eine geeignete Kultivierungsmasse, insbesondere Erde oder Torf. Die Masse wird abgebaut, aufbereitet, befeuchtet, verdichtet und in wohldefinierter Breite und Höhe auf einem Förderband abgelegt. Zum Vereinzeln der Preßtöpfe oder geeigneter Kombinationen davon dient eine Stanze mit einem motorisch angetriebenen, in die Masse auf dem Förderband eintauchenden Werkzeug, das Schneiden hat, die Kammern für die Preßtöpfe abteilen. Die von den Schneiden separierte, in die Kammern hineingedrückte Masse wird von Auswerfern, zwischen denen und dem Werkzeug ein Stellhub relativ zueinander stattfindet, durch eine Ausgabeöffnung der Kammern aus diesen heraus auf eine Ablage befördert.

Mit der vollautomatisierten Massenherstellung von Preßtöpfen gehen hohe Anforderungen an deren Maßhaltigkeit einher. Diesen Anforderungen werden herkömmliche Stanzwerkzeuge nicht immer voll gerecht.

Nach derzeitiger Praxis wird auf die in einer Kammer des Stanzwerkzeugs enthaltene, verdichtete Kultivierungsmasse von oben Druck mit einem Auswerfer ausgeübt, um die Masse durch die Ausgabeöffnung der Kammer nach unten auf eine Ablage zu befördern. Hemmend wirkt dabei die Reibung an den von den Schneiden des Stanzwerkzeugs gebildeten Seitenwänden der Kammer, und in besonderem Maß die Reibung an deren Ecken. Man beobachtet an der Ausgabeöffnung eine Materialaufwölbung im Mittelbereich des Preßtopfs. An den Seitenwänden und in den Ecken sind hingegen häufig Inhomogenitäten, Risse und Lücken im Material zu verzeichnen.

Aufgabe der Erfindung ist es, eine Stanze der eingangs genannten Art zu schaffen, mit der sich Preßtöpfe in gleichbleibend besserer Qualität herstellen lassen.

Bei der diese Aufgabe lösenden Stanze wird mit einer Anpressplatte, die anfangs des Stellhubs mit der Unterseite des ausgestanzten Topfs in Anlage steht, ein dem Druck des Auswerfers entgegengerichteter Gegendruck auf den Topf ausgeübt. Für den weiteren Stellhub wird die Anpressplatte von der Unterseite des Topfs abgestellt.

Der von der Anpressplatte ausgeübte Gegendruck führt zu einer Nachverdichtung der Preßtöpfe und einer Homogenisierung des Materialflusses aus den Kammern der Stanze. Damit wird eine gleichbleibend bessere Formgenauigkeit, Rißfreiheit und Freiheit von Lücken im Material der Preßtöpfe erreicht.

Bei einer bevorzugten Ausführungsform ist der Auswerfer während des Stellhubs stationär. Den Stellhub vollzieht das Werkzeug. Dadurch ist es möglich, die aus dem Werkzeug austretenden Preßtöpfe direkt auf eine Ablage zu befördern. Ein freier Wurf der Preßtöpfe findet also nicht unbedingt statt.

Bei einer bevorzugten Ausführungsform ist die Anpressplatte elastisch gepuffert.

Bei einer bevorzugten Ausführungsform ist die Anpressplatte auf Gummipuffern gelagert.

Die Erfindung wird im folgenden anhand eines in der Zeichnung dargestellten Ausführungsbeispiels näher erläutert. Es zeigen:

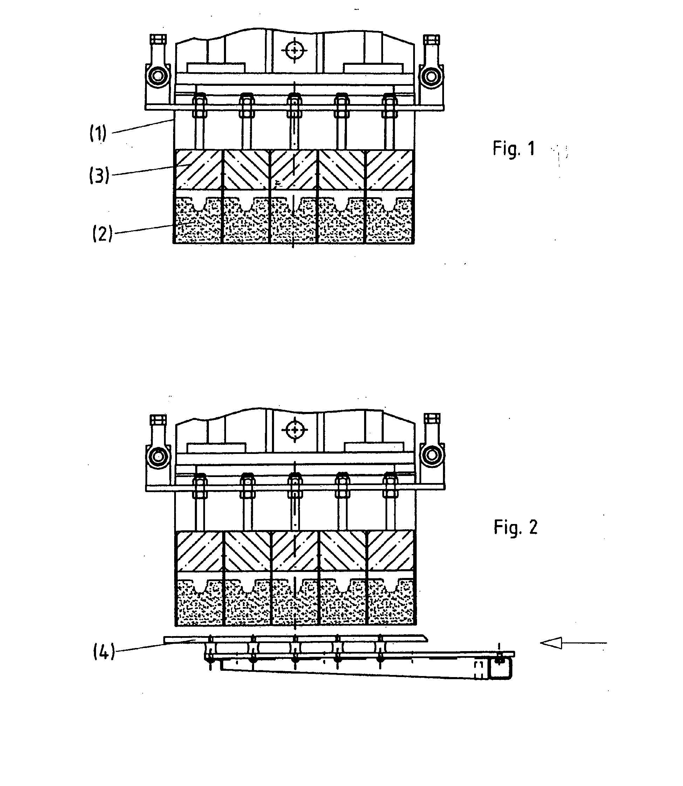

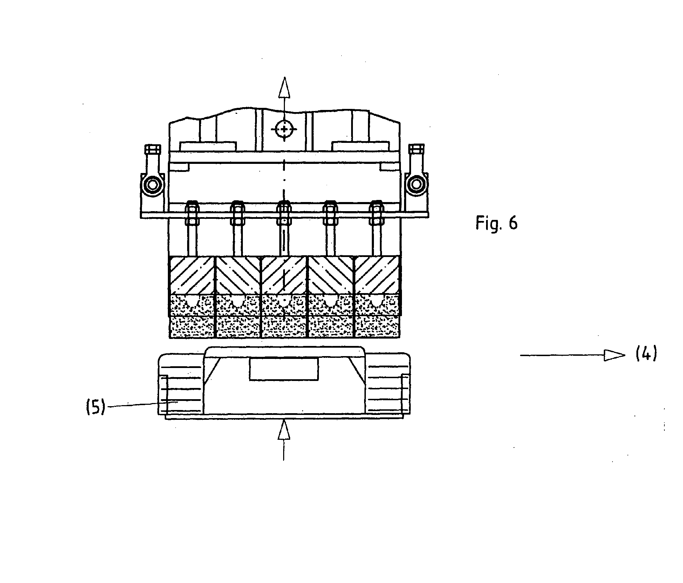

- Fig. 1: bis Fig. 6 seitliche Schnittansichten einer Stanze zum Verein- zeln von Preßtöpfen aus verdichteter Kultivierungsmasse in aufeinanderfolgendem Stadien ihres Betriebs, und zwar in
- Fig. 1: nach dem Ausstanzen verdichteter Kultivierungsmasse mit einem Stanzwerkzeug;
- Fig. 2: nach dem Zustellen einer Anpressplatte unter das Stanzwerk- zeug;
- Fig. 3: nach dem Anlegen der Anpressplatte an die Unterseite des Stanzwerkzeugs;
- Fig. 4: nach dem Niederfahren von Auswerfern auf die Oberseite der ausgestanzten Preßtöpfe;
- Fig. 5: nach anfänglichem Stellhub des Stanzwerkzeugs relativ zu den stehenbleibenden Auswerfern nach oben, wobei die Anpressplatte Druck auf die Unterseite der Preßtöpfe ausübt; und
- Fig. 6: nach dem Wegstellen der Anpressplatte und dem weiteren Stell- hub des Stanzwerkzeugs nach oben.

Der Stanze (1) wird auf einem Förderband verdichtete Kultivierungsmasse (2) zugeführt. Ein Stanzwerkzeug, das von Schneiden begrenzte Kammern für eine Mehrzahl von Preßtöpfen hat, taucht von oben in die Kultivierungsmasse (2) ein. Die Kammern werden mit der Kultivierungsmasse gefüllt. Das Stanzwerkzeug hebt von dem Förderband ab. Fig. 1 zeigt in den Kammern oberhalb der Kultivierungsmasse (2) je einen Auswerfer (3) in Bereitschaftsstellung.

In Fig. 2 ist eine Anpressplatte (4) von der Seite her unter das Stanzwerkzeug gefahren. Die Anpressplatte (4) ist auf Gummipuffern gelagert.

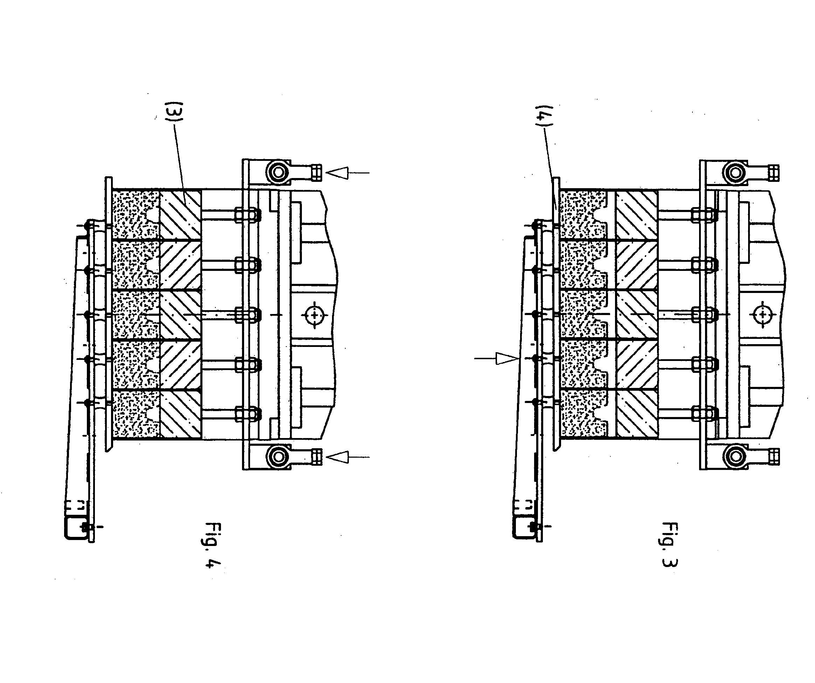

In Fig. 3 hat sich die Anpressplatte (4) an die Unterseite des Stanzwerkzeugs angelegt. Die Anpressplatte (4) übt einen Druck nach oben auf das Stanzwerkzeug aus. Der Druck wirkt auf die Unterkanten der Schneiden, die die Kammern des Stanzwerkzeugs begrenzen. Das Stanzwerkzeug nimmt den Druck der Anpressplatte (4) auf, ohne sich nach oben zu bewegen.

In Fig. 4 haben die Auswerfer (3) einen Arbeitshub nach unten vollführt. Die Auswerfer (3) liegen nunmehr an der Oberseite der Preßtöpfe an.

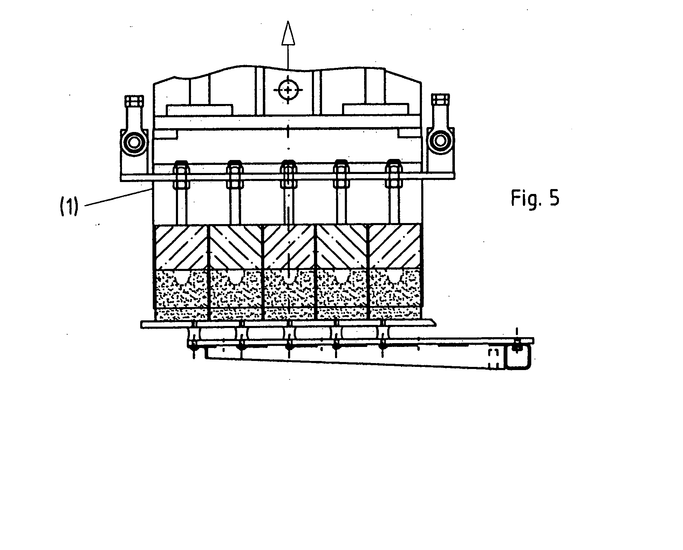

In Fig. 5 ist das Stanzwerkzeug relativ zu den stehenbleibenden Auswerfern (3) ein Stück hochgefahren. Die in den Kammern des Stanzwerkzeugs sitzenden Preßtöpfe würden die Hochfahrbewegung mitmachen, werden aber von den stehenbleibenden Auswerfern (3) daran gehindert. Die Auswerfer (3) üben so einen Druck auf die Oberseite der Preßtöpfe aus. Die Anpressplatte (4), die nicht länger von den Schneiden des Stanzwerkzeugs abgefangen ist, bewirkt einen Gegendruck auf die Unterseite der Preßtöpfe. Die Preßtöpfe haben begonnen, unten aus dem Stanzwerkzeug auszutreten.

In Fig. 6 ist die Anpressplatte (4) von dem Stanzwerkzeug zur Seite weggefahren. Unterhalb des Stanzwerkzeugs befindet sich eine Kiste (5), in die die Preßtöpfe durch den weiteren Stellhub des Stanzwerkzeugs gegen die stehenbleibenden Auswerfer (3) abgelegt werden.

### Liste der Bezugszeichen

- 1: Stanze
- 2: Kultivierungsmasse
- 3: Auswerfer
- 4: Anpressplatte
- 5: Kiste

## Patentansprüche

1. Verfahren zum Ausstanzen wenigstens eines Topfs, wenigstens eines Riegels in einer Reihe zusammenhängender Töpfe, wenigstens eines flächigen Verbunds zusammenhängender Töpfe oder einer Kombination davon aus verdichteter Kultivierungsmasse (2) wie z. B. Erde oder Torf mit einem in die Masse (2) eintauchenden Werkzeug, das Schneiden hat, die wenigstens eine Kammer abteilen, mit einem Auswerfer (3), der im Zuge eines Stellhubs von Auswerfer (3) und Werkzeug relativ zueinander Druck auf die Oberseite des ausgestanzten Topfs ausübt und den Topf durch eine Ausgabeöffnung der Kammer aus dieser heraus befördert, **dadurch gekennzeichnet, daß** anfangs des Stellhubs eine Anpressplatte (4) mit der Unterseite des ausgestanzten Topfs in Anlage steht und einen dem Druck des Auswerfers (3) entgegengerichteten Gegendruck auf den Topf ausübt, und daß die Anpressplatte (4) für den weiteren Stellhub von der Unterseite des Topfs abgestellt wird.

2. Verfahren nach Anspruch 1, **dadurch gekennzeichnet, daß** der Auswerfer (3) während des Stellhubs stationär ist und das Werkzeug den Stellhub vollzieht.

3. Verfahren nach Anspruch 1 oder 2, **dadurch gekennzeichnet, daß** die Anpressplatte (4) elastisch gepuffert ist.

4. Verfahren nach Anspruch 3, **dadurch gekennzeichnet, daß** die Anpressplatte (4) auf Gummipuffern gelagert ist.

5. Stanze (1) zum Vereinzeln wenigstens eines Topfs, wenigstens eines Riegels in einer Reihe zusammenhängender Töpfe, wenigstens eines flächigen Verbunds zusammenhängender Töpfe oder einer Kombination davon aus verdichteter Kultivierungsmasse (2) wie z. B. Erde oder Torf mit einem in die Masse (2) eintauchbaren Werkzeug, das Schneiden hat, die wenigstens eine Kammer abteilen, mit einem Auswerfer (3), der im Zuge eines Stellhubs von Auswerfer (3) und Werkzeug relativ zueinander Druck auf die Oberseite des ausgestanzten Topfs auszuüben und den Topf durch eine Ausgabeöffnung der Kammer aus dieser heraus zu befördern geeignet ist, **dadurch gekennzeichnet, daß** anfangs des Stellhubs eine Anpressplatte (4) mit der Unterseite des ausgestanzten Topfs in Anlage steht und einen dem Druck des Auswerfers (3) entgegengerichteten Gegendruck auf den Topf ausübt, und daß die Anpressplatte (4) für den weiteren Stellhub von der Unterseite des Topfs abstellbar ist.

6. Stanze (1) nach Anspruch 5, **dadurch gekennzeichnet, daß** der Auswerfer (3) während des Stellhubs stationär ist und das Werkzeug den Stellhub vollzieht.

7. Stanze (1) nach Anspruch 5 oder 6, **dadurch gekennzeichnet, daß** die Anpressplatte (4) elastisch gepuffert ist.

8. Stanze (1) nach Anspruch 7, **dadurch gekennzeichnet, daß** die Anpressplatte (4) auf Gummipuffern gelagert ist.
